# EUROPÄISCHE PATENTANMELDUNG

(11) **EP 2 732 686 A1**
(43) Veröffentlichungstag der Anmeldung: **21.05.2014**
(21) Anmeldenummer: 13401119.6
(22) Anmeldetag: 15.11.2013
(51) Int. Cl.: A01C 17/00

(54) **Schleuderstreuer**

(30) Priorität: 20.11.2012 DE 102012111142
(71) Anmelder: Amazonen-Werke H. Dreyer GmbH & Co. KG, 49205 Hasbergen (DE)
(72) Erfinder: Rahe, Florian, Dr., 49504 Lotte (DE); Stiegemeyer, Mathias, 49504 Lotte (DE); Wernsmann, Daniel, 49082 Osnabrück (DE)

(57) **Zusammenfassung**

An eine einen vorzugsweise hydraulischen Oberlenker aufweisende Dreipunktkupplungsvorrichtung eines Ackerschleppers angebauter Schleuderstreuer mit Vorratsbehälter und angetriebenen Schleuderscheiben, denen das sich im Vorratsbehälter befindliche Material in einstellbaren Mengen über Dosierorgane zugeführt wird, wobei durch die Einstellung der Länge des Oberlenkers der Schleuderstreuer in eine definierte Position zum Ackerschlepper zu bringen ist, wobei an dem Schleuderstreuer Vorrichtungen zur Ermittlung des Abstandes und/oder der Neigung der Schleuderscheiben zur Bodenfläche angeordnet sind. Um eine einfach ausgestaltete Anzeigevorrichtung für die Messvorrichtungen zur Einstellung der Anbaulage des Schleuderdüngerstreuers für den Fahrer vom Schleppersitz aus zu schaffen, ist vorgesehen, dass den Vorrichtungen eine vorzugsweise auf dem Ackerschlepper angeordnete elektronische Anzeigevorrichtung zur Anzeige des Abstandes und/oder der Neigung der Schleuderscheiben zur Bodenfläche zugeordnet ist.

## Beschreibung

Die Erfindung betrifft einen Schleuderstreuer gemäß des Oberbegriffes des Patentanspruches 1.

Ein derartiger Schleuderstreuer ist in der DE 30 33 666 A1 beschrieben. Schleuderstreuer verteilen das ihnen zugeführte Material mittels rotierend angetriebenen und mit Wurfschaufeln besetzten Schleuderscheiben in Breitverteilung auf der Bodenoberfläche. Insbesondere wenn Dünger auf Ackerflächen ausgebracht wird, muss eine möglichst gleichmäßige Verteilung des Düngers erfolgen. Um dieses zu erreichen, muss der Düngerstreuer in einer ganz bestimmten Position und Lage zur Bodenoberfläche eingestellt werden. Hierzu sind an diesem bekannten Schleuderstreuer als Gestängevorrichtungen ausgebildete Messvorrichtungen zur Messung der Höhenlage und Neigung des Düngerstreuers angeordnet. Die Anzeigevorrichtungen dieser Messvorrichtungen sind, wenn überhaupt, nur sehr schlecht vom Schleppersitz aus vom Fahrer einzusehen.

Der Erfindung liegt die Aufgabe zu Grunde, eine einfach ausgestaltete Anzeigevorrichtung für die Messvorrichtungen zur Einstellung der Anbaulage des Schleuderdüngerstreuers vom Schleppersitz aus für den Fahrer zu schaffen.

Diese Aufgabe der Erfindung gemäß dadurch gelöst, dass den Vorrichtungen eine vorzugsweise auf dem Ackerschlepper angeordnete elektronische Anzeigevorrichtung zur Anzeige des Abstandes und/oder deren Neigung der Schleuderscheiben zur Bodenfläche zugeordnet ist.

Infolge dieser Maßnahme wird die Überprüfung des korrekten Anbaus der Schleuderstreuers an den Ackerschlepper sowie der korrekte Anbau der Schleuderstreuers an den Ackerschlepper wesentlich vereinfacht. Der Fahrer des Ackerschleppers, an dem der Schleuderstreuer angebaut ist, kann vom Schleppersitz auf aufgrund der Anzeige auf der Anzeigevorrichtung dies überprüfen. Der Anzeigevorrichtung werden von den Messvorrichtungen entsprechende Daten übermittelt und von ihr zur Anzeige gebracht. Bevorzugt sind in die Messvorrichtungen elektrisch oder elektronisch ausgebildet und übertragen entsprechende Messdaten an die elektrische oder elektronische Anzeigevorrichtung, die mit einem Bordcomputer verbunden sein kann.

Damit der Fahrer den korrekten Anbau durch die Darstellung auf der Anzeigevorrichtung leicht erkennen bzw. erfassen kann, ist vorgesehen, dass der Abstand und/oder die Neigung der Schleuderscheiben zur Bodenfläche in grafischer Weise auf der als Display ausgebildeten Anzeigevorrichtung angezeigt werden.

Eine äußerst einfache Einstellung der Schleuderstreuers in die korrekten Anbaulage lässt sich dadurch erreichen, dass den Vorrichtungen und der Anzeigevorrichtung ein Bordcomputer zugeordnet ist, dass mittels des Bordcomputers aufgrund der von den Vorrichtungen ermittelten Daten der hydraulische Oberlenker derart ansteuerbar ist, dass die Schleuderscheiben des Schleuderstreuers in eine horizontale Lage bringbar sind. Somit kann der Schleuderstreuer durch die Einstellung über den die polnischen Ohrlenker richtig ausgerichtet werden.

Ein automatisch korrekter Anbau und Lage des Schleuderstreuers lässt sich dadurch erreichen, dass der Bordcomputer aufgrund der von den Vorrichtungen ermittelten Daten den hydraulischen Oberlenker in automatischer Weise derart ansteuert, dass die Schleuderscheiben des Schleuderstreuers in eine horizontale Lage gebracht werden. Somit kann sich der Schleuderstreuer durch die Einstellung über den die polnischen Ohrlenker selber richtig ausrichten.

Um den Schleuderstreuer automatisch in die richtige Anbauhöhe zu bringen, ist vorgesehen, dass der Bordcomputer aufgrund der von den Vorrichtungen ermittelten Daten den in hydraulischer Weise anheb- und absenkbaren Dreipunktkraftheber in automatischer derart ansteuert, dass die Schleuderscheiben des Schleuderstreuers in die für das Ausbringen des zu verteilenden Materiales in den vorgesehenen Abstand zur bestreuenden Bodenfläche gebracht werden.

In einfacher Weise lässt sich der Schleuderstreuer in die richtige Anbauhöhe und/oder -lage dadurch bringen, dass der Bordcomputer aufgrund der von den Vorrichtungen ermittelten Daten den hydraulisch an- und absenkbaren Dreipunktkraftheber in automatischer derart ansteuerbar, dass die Schleuderscheiben des Schleuderstreuers in eine horizontale Lage gebracht werden.

Durch die korrekte Lage des Schleuderstreuers gegenüber dem Ackerschlepper, an dem er angebaut ist, ist die Grundvoraussetzung dafür geschaffen, ein ordentliches Streubild und Streugutverteilung zu erzielen. Hierbei sollte der Düngerstreuer dann horizontal ausgerichtet angeordnet sein, wenn der Ackerschlepper ebenfalls auf einer horizontalen Fläche steht.

Durch die dem Schleuderstreuer zugeordneten Vorrichtungen zur Ermittlung des Abstandes und/oder deren Neigung der Schleuderscheibe zur Bodenoberfläche lassen sich in Verbindung mit dem Bordcomputer entsprechende Werte ermitteln, dass der Schleuderstreuer immer korrekt gegenüber der Bodenoberfläche, die bestreut werden soll, ausgerichtet ist. Hierbei kann die Vorrichtung zur Ermittlung der Neigung quasi als elektronische Wasserwaage fungieren. Beispielsweise mithilfe dieser Neigungssensoren und des von dem Bordcomputer an steuerbaren hydraulischen Oberlenkers kann der Schleuderstreuer automatisch in korrekter Weise ausgerichtet werden.

Des Weiteren besteht in der Vorteil, wenn zusätzlich während der Arbeit die Neigung in Fahrtrichtung erfasst wird, dass bei Fahrten am Hang der hydraulische Oberlenker entsprechend angesteuert werden, so dass der Streuer immer korrekt ausgerichtet wird. Hierdurch lässt sich das Streuergebnis wesentlich verbessern.

Weiterhin kann auch die seitliche Neigung der Schleuderstreuers beim Ausbringen des Düngers an einem Hang erfasst werden. Hierdurch kann dann beispielsweise der Aufgabepunkt des Düngers auf der Schleuderscheibe entsprechend angepasst und nachgestellt werden, wodurch die Streueigenschaften und das Streuergebnis sich ebenfalls verbessern.

Wenn die Neigungssensoren bei einem Schleuderstreuer, dessen Schleuderscheiben mit einem hydraulisch oder mit einem anderen regelbaren Antrieb angetrieben werden, lässt sich die Drehzahl der Schleuderscheibe unabhängig voneinander einstellen und unabhängig voneinander anpassen, so dass bei seitlicher Schräglage die eine Schleuderscheibe schneller angetrieben werden kann als die andere, wodurch wiederum eine gute und gleichmäßige Düngerverteilung erreicht wird.

Weitere Einzelheiten der Erfindung sind der Beispielsbeschreibung zu entnehmen.

Moderne Schleuderdüngerstreuer sind als Zweischeibenstreuer ausgebildet. Die Streuer weisen einen Rahmen und einen Vorratsbehälter auf. Der Vorratsbehälter ist durch ein dachförmiges Mittelteil in seinem unteren Bereich in zwei Auslauftrichter unterteilt ist. Die Auslauftrichter sind durch einstellbare Dosierorgane nach unten abgeschlossen. Die Dosierorgane führen in einstellbaren Mengen den unterhalb der Dosierorgane rotierend und im entgegengesetzten Drehsinn zueinander angetriebenen und mit Wurfschaufeln besetzten Schleuderscheiben den auszubringenden Dünger zu. Mittels der Wurfschaufeln wird der Dünger in Breitverteilung auf der zu bestreuenden Ackerfläche verteilt. Um eine gleichmäßige Streugutverteilung mit einer guten Düngerverteilung zu erzielen, sollte die Schleuderscheibe horizontal zu der zu bestreuenden Fläche bzw. parallel zu der zu bestreuenden Fläche ausgerichtet sein.

Der Rahmen des Streuers weist auf seiner Vorderseite Dreipunktkupplungselemente zum Anbau an den Dreipunktkraftheber eines Ackerschleppers auf. Zweckmäßigerweise ist der Oberlenker des Dreipunktkrafthebers des Ackerschleppers als hydraulisch verstellbarer Oberlenker ausgebildet.

Auf dem Ackerschlepper, an dem der Schleuderstreuer über den Dreipunktkraftheber angebaut ist, ist ein Bordcomputer angeordnet. An dem Schleuderstreuer sind Vorrichtungen zur Ermittlung des Abstandes und/oder der Neigung des Schleuderstreuers bzw. dessen Schleuderscheibe zur Bodenoberfläche angeordnet. Diese Vorrichtung sind als Abstands- und/oder Neigungssensoren ausgebildet. Diese Sensoren übermitteln entsprechende Messdaten an den Bordcomputer. Der Bordcomputer ermittelt aus diesen übermittelten Daten aufgrund eines in seinem Speicher hinterlegten Auswertungsprogrammes entsprechende Daten, um diese auf der Anzeigevorrichtung des Bordcomputers anzuzeigen. Auf dieser Anzeigevorrichtung, die vom Schlepperfahrer, wenn er auf den Schleppersitz sitzt, sich in seinem gut einsehbaren Sichtbereich befindet und somit gut von ihm einsehbar ist, werden der Abstand und oder die Neigung der Schleuderscheibe zur Bodenoberfläche angezeigt.

Bevorzugt wird die Anbauhöhe und/oder Neigung der Schleuderstreuers bzw. der Schleuderscheibe zu Bodenoberfläche in grafischer Weise auf der als Display ausgebildeten Anzeigevorrichtung angezeigt. Somit kann der Fahrer den korrekten Anbau leicht erkennen bzw. erfassen. Somit kann der Fahrer die Überprüfung des korrekten Anbaus der Schleuderstreuers an den Ackerschlepper sowie der korrekte Anbau der Schleuderstreuers an den Ackerschlepper in einfacher und bequemer Weise vornehmen. Der Fahrer des Ackerschleppers, an dem der Schleuderstreuer angebaut ist, kann vom Schleppersitz aus, aufgrund der Anzeige auf der Anzeigevorrichtung dies überprüfen. Der Anzeigevorrichtung werden von den Messvorrichtungen entsprechende Daten übermittelt und von ihr zur Anzeige gebracht. Bevorzugt sind in die Messvorrichtungen elektrisch oder elektronisch ausgebildet und übertragen entsprechende Messdaten an die elektrische oder elektronische Anzeigevorrichtung, die mit dem Bordcomputer verbunden ist.

Der Abstand und/oder die Neigung der Schleuderscheiben zur Bodenfläche werden, wie erwähnt in grafischer Weise auf der als Display ausgebildeten Anzeigevorrichtung angezeigt. Der Fahrer kann so den korrekten Anbau durch die Darstellung auf der Anzeigevorrichtung leicht erkennen bzw. erfassen kann. Erforderlichenfalls kann er entsprechende Korrektureinstellungen zum richtigen Anbau und Lage des Streuers vornehmen. Dies wird durch den hydraulischen Oberlenker erleichtert

Den Vorrichtungen und der Anzeigevorrichtung ist ein Bordcomputer zugeordnet. Mittels des Bordcomputers ist aufgrund der von den Vorrichtungen ermittelten Daten der hydraulische Oberlenker derart anzusteuern, dass die Schleuderscheiben des Schleuderstreuers in eine horizontale Lage gebracht werden. Somit kann der Schleuderstreuer durch die Einstellung über den die hydraulischen Ohrlenker in einfacher Weise richtig ausgerichtet werden. Somit wird eine äußerst einfache Einstellung der Schleuderstreuers in der korrekten Anbaulage erreicht.

Der Bordcomputer steuert aufgrund der von den Vorrichtungen ermittelten Daten den hydraulischen Oberlenker in automatischer Weise derart an, dass die Schleuderscheiben des Schleuderstreuers in eine horizontale Lage gebracht werden. Somit kann sich der Schleuderstreuer durch die Einstellung über den die hydraulischen Ohrlenker selber richtig ausrichten. Somit wird automatisch ein korrekter Anbau und Lage des Schleuderstreuers erreicht.

Der Bordcomputer steuert aufgrund der von den Vorrichtungen ermittelten Daten den in hydraulischer Weise anheb- und absenkbaren Dreipunktkraftheber in automatischer derart an, dass die Schleuderscheiben des Schleuderstreuers in die für das Ausbringen des zu verteilenden Materiales in den vorgesehenen Abstand zur bestreuenden Bodenfläche gebracht werden. So ist der Schleuderstreuer automatisch in die richtige Anbauhöhe und Lage zu bringen.

Der Schleuderstreuer lässt sich In einfacher Weise in die richtige Anbauhöhe und/oder -lage dadurch bringen, dass der Bordcomputer aufgrund der von den Vorrichtungen ermittelten Daten den hydraulisch an- und absenkbaren Dreipunktkraftheber in automatischer derart ansteuert, dass die Schleuderscheiben des Schleuderstreuers in eine horizontale Lage gebracht werden.

Durch die korrekte Lage des Schleuderstreuers gegenüber dem Ackerschlepper, an dem er angebaut ist, ist die Grundvoraussetzung dafür geschaffen, ein ordentliches Streubild und Streugutverteilung zu erzielen. Hierbei sollte der Düngerstreuer dann horizontal ausgerichtet angeordnet sein, wenn der Ackerschlepper ebenfalls auf einer horizontalen Fläche steht.

Durch die dem Schleuderstreuer zugeordneten Vorrichtungen zur Ermittlung des Abstandes und/oder deren Neigung der Schleuderscheibe zur Bodenoberfläche lassen sich in Verbindung mit dem Bordcomputer entsprechende Werte ermitteln, dass der Schleuderstreuer immer korrekt gegenüber der Bodenoberfläche, die bestreut werden soll, ausgerichtet ist. Hierbei kann die Vorrichtung zur Ermittlung der Neigung quasi als elektronische Wasserwaage fungieren. Beispielsweise mithilfe dieser Neigungssensoren und des von dem Bordcomputer an steuerbaren hydraulischen Oberlenkers kann der Schleuderstreuer automatisch in korrekter Weise ausgerichtet werden.

Des Weiteren besteht in der Vorteil, wenn zusätzlich während der Arbeit die Neigung in Fahrtrichtung erfasst wird, kann bei Fahrten am Hang der hydraulische Oberlenker entsprechend angesteuert werden, so dass der Streuer immer korrekt ausgerichtet wird. Hierdurch lässt sich das Streuergebnis wesentlich verbessern.

Weiterhin kann auch die seitliche Neigung der Schleuderstreuers beim Ausbringen des Düngers an einem Hang erfasst werden. Hierdurch kann dann beispielsweise der Aufgabepunkt des Düngers auf der Schleuderscheibe entsprechend angepasst und nachgestellt werden, wodurch die Streueigenschaften und das Streuergebnis sich ebenfalls verbessern.

Wenn die Neigungssensoren bei einem Schleuderstreuer, dessen Schleuderscheibe mit einem hydraulischen oder mit einem anderen regelbaren Antrieb angetrieben werden, lässt sich die Drehzahl der Schleuderscheibe unabhängig voneinander einstellen und unabhängig voneinander anpassen, so dass bei seitlicher Schräglage die eine Schleuderscheibe schneller angetrieben werden kann als die andere, wodurch wiederum eine gute und gleichmäßige Düngerverteilung erreicht wird.

## Patentansprüche

1. An eine einen vorzugsweise hydraulischen Oberlenker aufweisende Dreipunktkupplungsvorrichtung eines Ackerschleppers angebauten Schleuderstreuer mit Vorratsbehälter und angetriebenen Schleuderscheibe, denen das sich im Vorratsbehälter befindliche Material in einstellbaren Mengen über Dosierorgane geführt wird, wobei durch die Einstellung der Länge des Oberlenkers der Schleuderstreuer in eine definierte Position zum Ackerschlepper zu bringen ist, wobei an dem Schleuderstreuer Vorrichtungen zur Ermittlung des Abstandes und/oder deren Neigung der Schleuderscheiben zur Bodenfläche angeordnet sind, **dadurch gekennzeichnet, dass** den Vorrichtungen eine vorzugsweise auf dem Ackerschlepper angeordnete elektronische Anzeigevorrichtung zur Anzeige des Abstandes und/oder deren Neigung der Schleuderscheiben zur Bodenfläche zugeordnet ist.

2. Schleuderstreuer nach Anspruch 1, **dadurch gekennzeichnet, dass** der Abstand und/oder die Neigung der Schleuderscheiben zur Bodenfläche in grafischer Weise auf der als Display ausgebildeten Anzeigevorrichtung angezeigt werden.

3. Schleuderstreuer noch zu mindestens einem der vorstehenden Ansprüche, **dadurch gekennzeichnet, dass** den Vorrichtungen und der Anzeigevorrichtung ein Bordcomputer zugeordnet ist, dass mittels des Bordcomputers aufgrund der von den Vorrichtungen ermittelten Daten der hydraulische Oberlenker derart ansteuerbar ist, dass die Schleuderscheiben des Schleuderstreuers in eine horizontale Lage bringbar sind.

4. Schleuderstreuer noch zu mindestens einem der vorstehenden Ansprüche, **dadurch gekennzeichnet, dass** der Bordcomputer aufgrund der von den Vorrichtungen ermittelten Daten den hydraulische Oberlenker in automatischer derart ansteuert, dass die Schleuderscheiben des Schleuderstreuers in eine horizontale Lage gebracht werden.

5. Schleuderstreuer noch zu mindestens einem der vorstehenden Ansprüche, **dadurch gekennzeichnet, dass** der Bordcomputer aufgrund der von den Vorrichtungen ermittelten Daten den in hydraulischer Weise anheb- und absenkbaren Dreipunktkraftheber in automatischer derart ansteuert, dass die Schleuderscheiben des Schleuderstreuers in die für das Ausbringen des zu verteilenden Materiales in den vorgesehenen Abstand zur bestreuenden Bodenfläche gebracht werden.

6. Schleuderstreuer noch zu mindestens einem der vorstehenden Ansprüche, **dadurch gekennzeichnet, dass** der Bordcomputer aufgrund der von den Vorrichtungen ermittelten Daten den hydraulische an- und absenkbaren Dreipunktkraftheber in automatischer derart ansteuerbar, dass die Schleuderscheiben des Schleuderstreuers in eine horizontale Lage gebracht werden.
